# EUROPEAN PATENT APPLICATION

(11) **EP 1 414 189 A1**
(43) Date of publication of application: **28.04.2004**
(21) Application number: 02292604.2
(22) Date of filing: 21.10.2002
(51) Int. Cl.: H04L 12/28, G11B 27/00

(54) **Advanced data processing system communication protocol**

(71) Applicant: DEUTSCHE THOMSON-BRANDT GMBH, 78048 Villingen-Schwenningen (DE); Thomson Licensing S.A., 92648 Boulogne Cedex (FR)
(72) Inventor: Bäumle, Jürgen, 79790 Küssaberg (DE); Duttlinger, Oliver, 79843 Löffingen (DE); Dietmar, Peter, 78669 Wellendingen (DE); Ramirez, Rosario, 78052 Villingen-Schwenningen (DE)
(74) Representative: Thies, Stephan

(57) **Abstract**

The present invention relates to a communication protocol for the communication between an advanced data processing system (DPS) 2 and a micro controller 1 and/or a user interface unit.

It is an object of the present invention to overcome communication problems which may arise when an advanced data processing system 2 has to support a large range of user interface units and micro controllers 1 with very different data processing and display capabilities.

According to the invention, a set of commands and messages is defined extending the Serial Bus for Compact Disc Servo (CD BUS) Communication Protocol, the set of commands and messages facilitating the exchange of information between an advanced data processing system 2 and a micro controller 1 and/or a user interface unit necessary for content navigation on a storage medium comprising audio files and/or directories.

## Description

The present invention relates to a communication protocol for the communication between an advanced data processing system (DPS) and a micro controller and/or a user interface unit.

In recent years an increasing need has been experienced for providing consumer electronic devices, like e.g. compact disc players, DVD-players and others, with the capability of processing audio data stored as audio files in a compressed (e.g. MP3 or MP3 Pro, WMA (Windows Media Audio)) or uncompressed (e.g. WAV (Waveform Audio File)) data format on storage media. In contrast to an audio processing system according to prior art, which can only read and/or write audio information according to the Compact Disc Standard (Red Book), an advanced data processing system (DPS) capable of playing back and/or recording audio files in a compressed or uncompressed data format needs to be able to extract, decode, and convey data related to the file system and the audio files stored on a storage medium. While known audio processing systems communicate in accordance with the Serial Bus for Compact Disc (CD BUS) communication protocol, communication problems may arise when an advanced data processing system has to support a large range of user interface units and micro controllers with very different data processing and display capabilities.

It is, therefore, an object of the present invention to overcome these communication problems. Though the invention will, in the following, be explained in view of optical recording media, it is also applicable to other types of recording media, e.g. magnetical recording media, hard disc drives etc.

According to the invention, a set of commands and messages necessary for content navigation on a storage medium comprising a file system with audio files, directories and/or playlists is defined. Such a set of commands and messages facilitates the exchange of information between an advanced data processing system and/or a user interface unit and/or a micro controller.

The naming, commands and messages, rather describes the communication direction, not the actual function. Commands are transmitted from the micro controller to the advanced data processing system, while messages are transmitted from the advanced data processing system to the micro controller.

All data, which are necessary for content navigation and for content display on a user interface, either in flat or hierarchical view, are stored inside the advanced data processing system. In flat view, all directories are shown as if they were present in the root directory, i.e. at the first subdirectory level. In hierarchical view, the full detailed hierarchy (e.g. up to 16 levels) is stored and displayed.

Files, directories and playlists are numbered continuously, starting with 1, according to the following table. The directory starts with 0 for the root directory.
- Files: file1 ... file600 (minimum)
- Directories: dir0 (root), dir1 ... dir299(minimum)
- Playlist: playlist1 ... playlist10

If a variable field length is used, the numbers of files and directories which can be stored can be much higher than the minimum number indicated in the table. The given numbers are the lower limits.

Favorably, the set of commands and messages extends the Serial Bus for Compact Disc Servo (CD BUS) Communication Protocol. In this way only commands and messages for specific tasks in relation to audio files, which cannot be handled by audio processing systems according to prior art, have to be defined. For all other tasks the known commands and messages can be used.

According to the invention, the set of commands and messages comprises commands and messages for requesting and sending file system information comprising names of audio files, directories and/or playlists. This allows to visualize the content of a recording medium, which is necessary for user navigation inside the files system and for the selection of specific audio files by a user. The file system information can be requested and sent for the whole recording medium at once when the recording medium is inserted in a device for reading from and/or writing to recording media. In another approach the file system information is requested and sent on a directory level only, i.e. as soon as a directory is accessed the information on the content of the directory is requested and sent. Of course, a mixture of both solutions or other approaches are also possible.

Advantageously, the set of commands and messages comprises commands and messages for setting a playmode, and for requesting and sending playmode information. The playmode determines the current play status (if the recording medium is being played back), including for example pause on or pause off, (fast) search forward and backward, mute, attenuation, autoplay, play file, play directory and/or play playlist. If the playmode is set in stop mode, i.e. the recording medium is currently not played back, it acts as a preset.

Favorably, the set of commands and messages comprises commands and messages for requesting and sending sector and/or sector header information. These commands and messages can, for example, be used for synchronizing the subcode time codes and sector addresses of data contained on the recording medium.

According to the invention, the set of commands and messages comprises commands for skipping frames of the audio files already stored within the memory and messages for sending information on the skipping status. In this way it is possible to flush unused or invalid data, e.g. for performing a search mode.

Favorably, the set of commands and messages comprises commands for navigating between different partitions of the file system. In case the number of files or directories exceeds the limits, the recording medium will be divided into several partitions. By accessing the different partitions, the total number of files and/or directories, which can be handled, is increased. A user is, therefore, less limited with regard to the number of files and directories.

Advantageously, the set of commands and messages comprises commands and messages for requesting and sending additional information related to the audio files. This additional information can comprise information on the file type, e.g. mp3. mp3pro, wma and so on, on the copyright and /or the copy protection of the audio files, or on the content of the audio files, like the artist, the album, the genre and the like. Information of the latter type is contained, for example, in the ID3 tags of mp3 files. The additional information can be used for digital rights management, for user information or for the selection of appropriate decoding means. Of course, many other applications are possible.

Favorably, the set of commands and messages comprises commands for playing only specific audio files, the specific audio files being determined by the additional information related to the audio files. In this way a user can decide to reproduce only audio files belonging to a specific album, or audio files having the same author, and so on. This makes handling of the large number of audio files, which may be stored on a recording medium, easier for a user.

Advantageously, the set of commands and messages comprises commands and messages for requesting and sending bitrate information for the audio files. This information is favorably evaluated by the micro controller and facilitates decoding of compressed audio files.

According to the invention, an advanced data processing system uses a communication protocol having the inventive commands and messages for communication with a micro controller. Such an advanced data processing system is capable of handling recording media comprising a file system with audio files, directories and/or playlists.

According to the invention, an apparatus for reading from and/or writing to optical recording media uses a communication protocol having the inventive commands and messages or an advanced data processing system. Such an apparatus is capable of handling recording media comprising a file system with audio files, directories and/or playlists.

In the following, the commands of the communication protocol will be explained in more detail.

| **No** | **Command name** | **Description** |
|---|---|---|
| 00 | **reserved** | |
| 01 | **SQRQ** <SCRW> | Subcode Q-channel request: |
| | | |
| | | The subcode request decides what kind of subcodes are to be sent to the micro controller, with or without audio level data. The subcode will be transmitted during play and during pause (repeating) in regular intervals. |
| 02 | **PLMD** <MODE1> <MODE2> | Playmode: |
| | | |
| | | The playmode bits determine the current play status (if playing), including pause on or off, (fast) search forward and backward, mute, attenuation, autoplay, play file, play directory and play playlist. |
| | | |
| | | If these bits are set in stop mode they act as presets. The bits are cleared after reset and after execution of a stop command. |
| 03 | **reserved** | |
| 04 | **PLTRT** <sec> <min> <TnoLow> <TnoHigh> | Play at track time: |
| | | |
| | | The track file number has a size of 2 byte, the time is given by the format min:sec. While "min" can be in the range from 0 to 255, "sec" is in the range from 0 to 59. |
| | | |
| | | The DPS first performs a track jump to the beginning of the track, like the PLTNO command, in order to get the needed information and then perform a jump to the requested time. This is not possible if a variable bitrate or an ID3 Tag 2.4 is available. In this case an error message will be sent. |
| 05 | **AUTOPLAY** <NoLow> <NoHigh> <Mode> | Autoplay: |
| | | |
| | | Starts an autoplay mode in the advanced data processing system. |
| | | |
| | | <NoLow><NoHigh>: Indicates either the file number to start, the directory number, or the playlist number. |
| | | |
| | | <Mode>: Indicates whether to play a file (starting with the selected file number in continuous order till the end of the partition), a directory (all files in the selected directory in order, or a playlist (all files in the playlist). In case of OSTA multiaudio format, <Mode> can also indicate whether to play a specific artist, album or genre. |
| 06 | **PLTNO** <TnoLow> <TnoHigh> | Play track number: |
| | | |
| | | The track/file numbers are counted by the DPS (Serial number of the files for the actual partition). |
| | | |
| | | When the DPS has played back a music file and no next file/track is selected, the DPS sends a message to the micro controller and sets the system to PAUSE. After a period of time without receiving any PLTNO command, the system goes into STOP. |
| | | |
| | | This allows the micro controller to select the next track/file (e.g. in shuffle or program play) and avoids starting playback of a track, which isn't selected (similar to a single play mode). |
| 07 | **PLNXT** <TnoLow> <TnoHigh> | Play next track: |
| | | |
| | | Selects the track to be played next, without aborting the current playback. |
| 08 | **PLETNO** <TnoLow> <TnoHigh> | Play end of track number: |
| | | |
| | | The DPS initiates a jump to the end of the file/track selected by the 2 byte track number and will wait there. The micro controller can then search back from this position or stop. |
| 09 | **reserved** | |
| 0A | **RDFS** <Partition> <Mode> <FirstFrame> <FirstSec> <FirstMin> <LastFrame> <LastSec> <LastMin> | Read file system: |
| | | |
| | | Starts reading the file system |
| | | |
| | | <Mode>: Mode can be either ISO9669/UDF or OSTA multiaudio; if OSTA multiaudio is selected and no TOC.MAU is found, ISO9660 resp. UDF will be used as default. |
| | | |
| | | <Partition>: The partition to be selected. The disc will be divided into several partitions, in case the number of files or directories exceeds the limits. |
| | | |
| | | <First>: First sector information of last session in MSF-format (minute, second, frame). |
| | | |
| | | <Last>: Last sector information of last session in MSF-format. |
| 0B | **STOP** | Stop: |
| | | |
| | | Stops the play mode. After completion it will return 'stopped' to the micro controller. If the DPS is already in stop mode, it will return immediately 'stopped'. After execution of STOP all play mode flags (PLMD ) are cleared. |
| | | |
| | | If the DPS is in STOP or PAUSE, the audio-out mailbox will be filled with zero-data (audio data = 00 -> MUTE), to ensure a continuous output timing to the succeeding blocks. |
| 0C | **SKIPTRK** <direction> | Skip track: |
| | | |
| | | Skips forward or backward, depending on <direction>, if the DPS is in autoplaymode. If not, an error message "command not available" will be sent. |
| | | |
| | | SKIP forward continues playing at the beginning of the next track in order. |
| | | |
| | | SKIP backward continues playing at the beginning of the current track, if the track time is larger than 3sec, and at the beginning of the previous track in order if track time is smaller than 3sec or equal to 3sec. |
| | | |
| | | An error message "target not found" will be send if no track is remaining (skip forward), or the first track will be played (skip backward). |
| 0D | **SKIPPARTITION** <direction> | Skip partition: |
| | | |
| | | Skips to the next possible partition. If no further partition exists, an error message "target not available" will be sent. |
| 0E | **reserved** | |
| 0F | **VERS** <source> | Version number: |
| | | |
| | | Requests the version number from the DPS software. Depending on the "source" value either the version of the micro controller software or the version of the DPS software will be sent. |
| 10 | **RDPSTA** | Request DPS status |
| 11 | **GLEN** <TnoLow> <TnoHigh> | Get length: |
| | | |
| | | After this command the DPS returns the length of the track given by the 2 byte number <TnoHigh> and <TnoLow>. |
| | | |
| | | The answer contains the length of the track or the size of the file, if the music length of the file cannot be calculated. |
| 12 | **RFSI** | Request file system information: |
| | | |
| | | Request to send the file system information to the micro controller. |
| 13 | **RMSFSTA** <status> | Status of RMSF request: |
| | | |
| | | Indicates the status of the RMSF (request minute, second, frame) request. |
| | | |
| | | The status can be either busy (acknowledge), done (ready), error (target not available), aborted by DPS or abort failed. |
| 14 | **SKIPSTA** <status> | Status of SKIPFRM request: |
| | | |
| | | Indicates the status of the SKIPFRM (skip number frames) request. |
| | | |
| | | The status can be either busy (acknowledge), done (ready), or error (target not found). |
| 15 | **reserved** | |
| 16 | **reserved** | |
| 17 | **RPLMD** | Request playmode: |
| | | |
| | | Requests the playmode bytes from the DPS. |
| 18 | **reserved** | |
| 19 | **reserved** | |
| 1A | **reserved** | |
| 1B | **GSTRUCT1** <DirNoLow> <DirNoHigh> | Get structure 1: |
| | | |
| | | Requests information about the selected Directory. |
| | | |
| | | <DirNoLow><DirNoHigh>: |
| | | |
| | | Indicates the directory number. |
| 1C | **GSTRUCT2** <StartEntryLow> <StartEntryHigh> <NoOfEntries> <TYPE> <NoOfChars> | Get structure 2: |
| | | |
| | | Requests to send the name of the selected type of entry. |
| | | |
| | | <StartEntryLow><StartEntryHigh>: Number of the first requested entry. |
| | | |
| | | <NoOfEntry>: Indicates the number of requested entries. |
| | | |
| | | <Type>: Indicates the requested entry type, e.g. file, directory, or playlist |
| | | |
| | | <NoOfChar>: Indicates the number of characters to be transmitted for each entry. If the name of the file or the playlist exceeds this limit, the name is truncated in a manner so that the extension is not affected. |
| 1D | **GSTRUCT3** <TnoLow> <TnoHigh> <ID> <NoOfChars> | Get structure 3: |
| | | |
| | | Requests to send the ID3-Tag of the selected file. By setting the <ID>-values, the Artist, the Album, the Title, the Genre, and the Year can be requested. |
| | | |
| | | An error message is sent if no ID3-Tag is available. |
| 1E | **SCAN** <frame> <sec> <min> | Request sector information |
| 1F | **RSECDATA** <OffsetLow> <OffsetHigh> | Request sector data |

In addition, the communication protocol comprises the following messages:

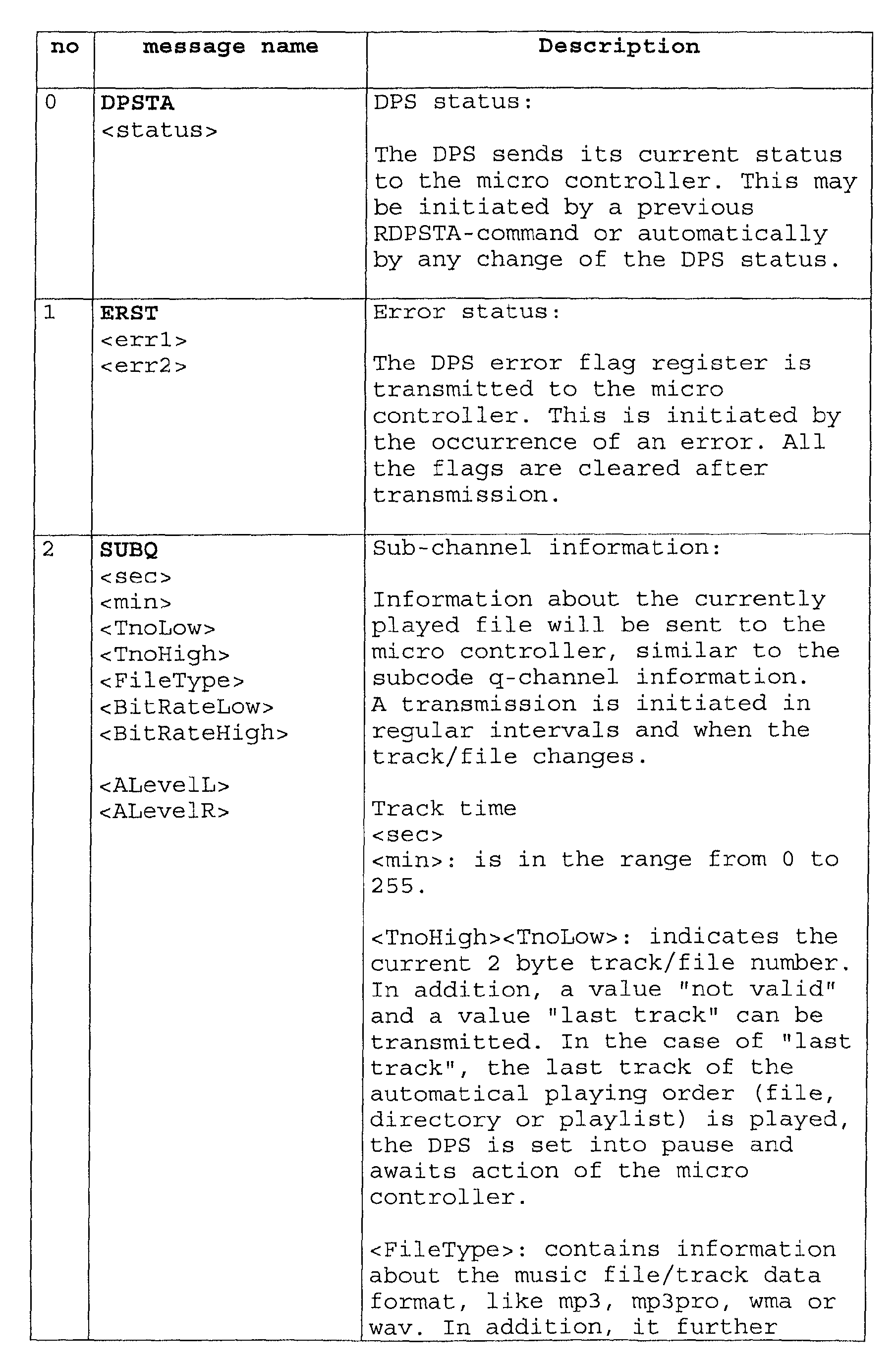

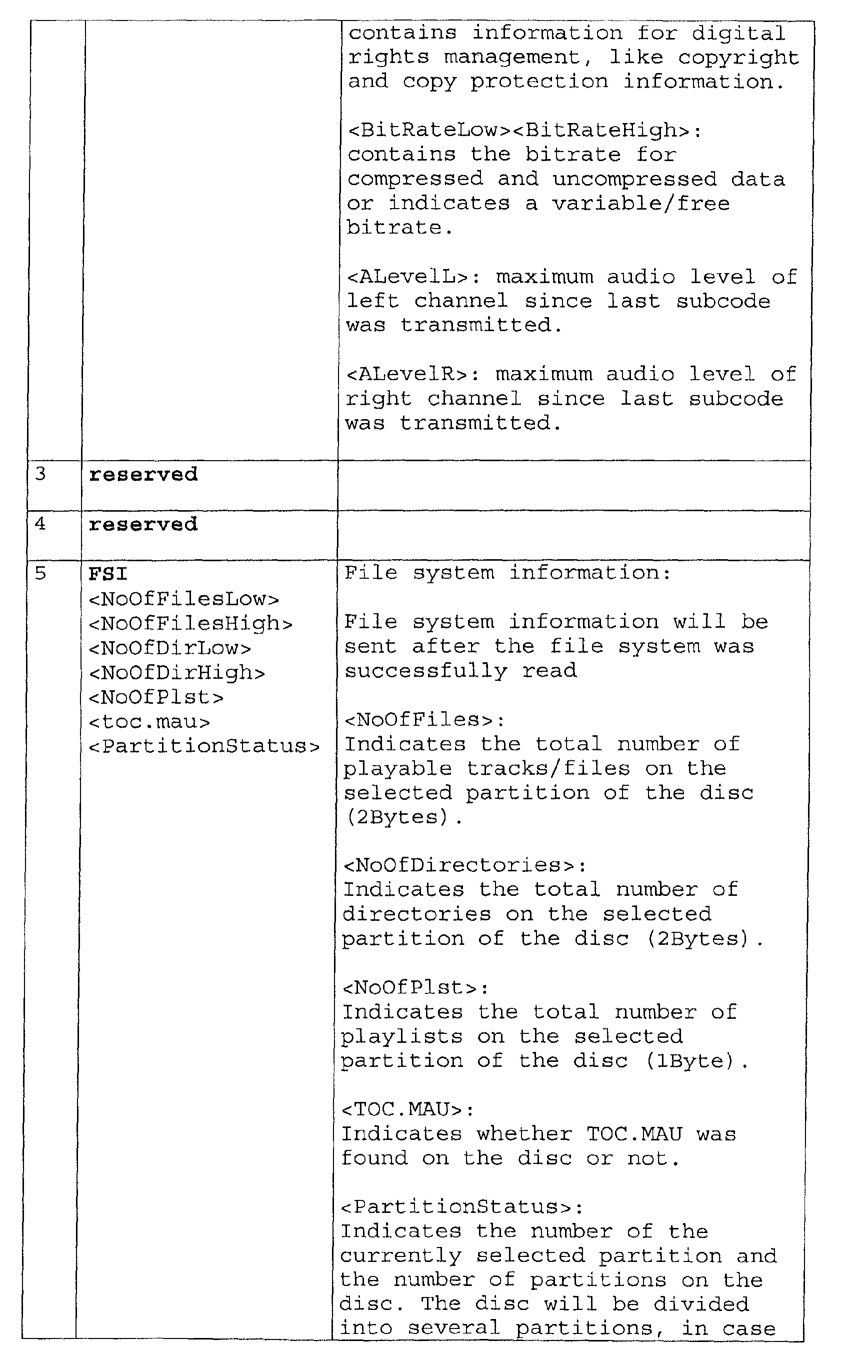

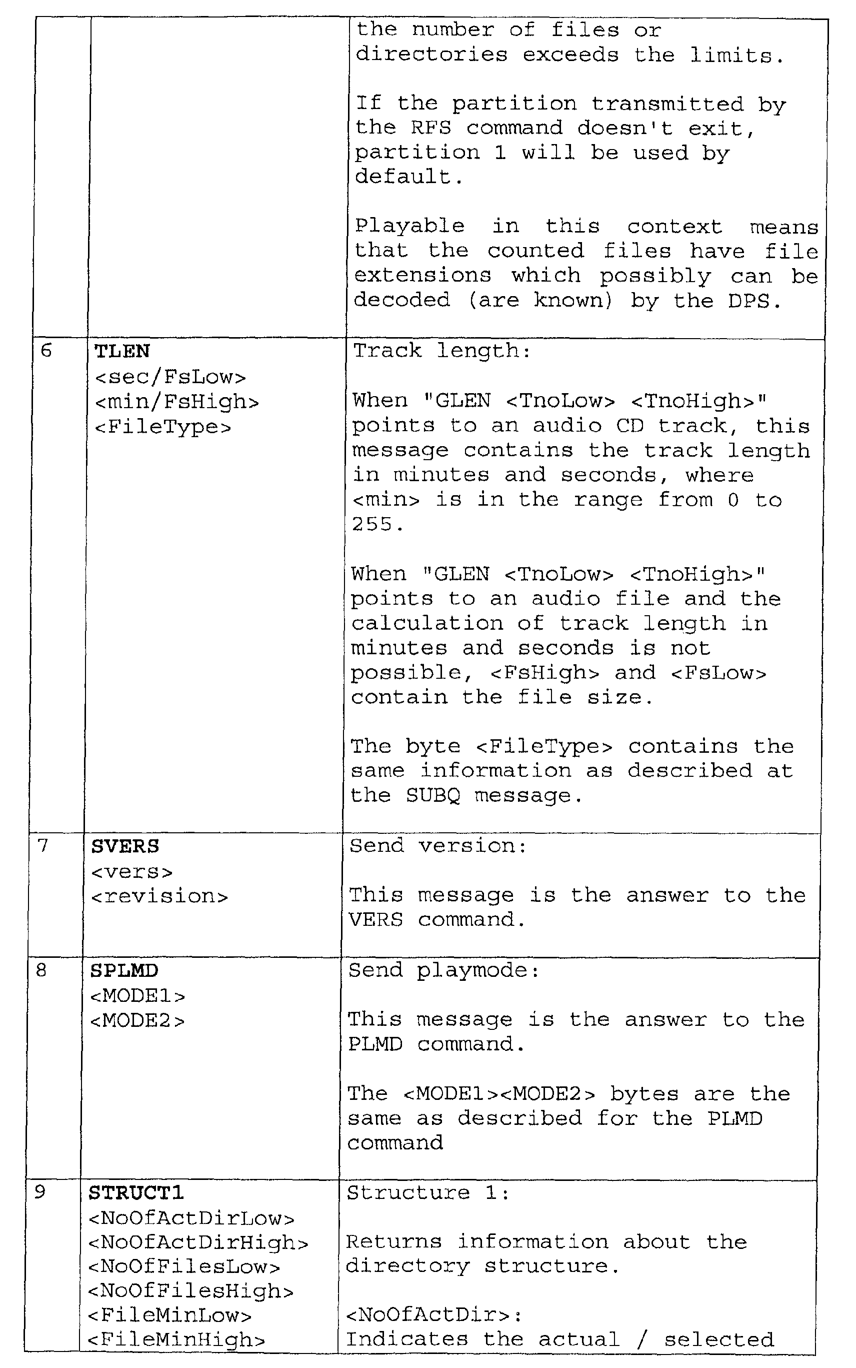

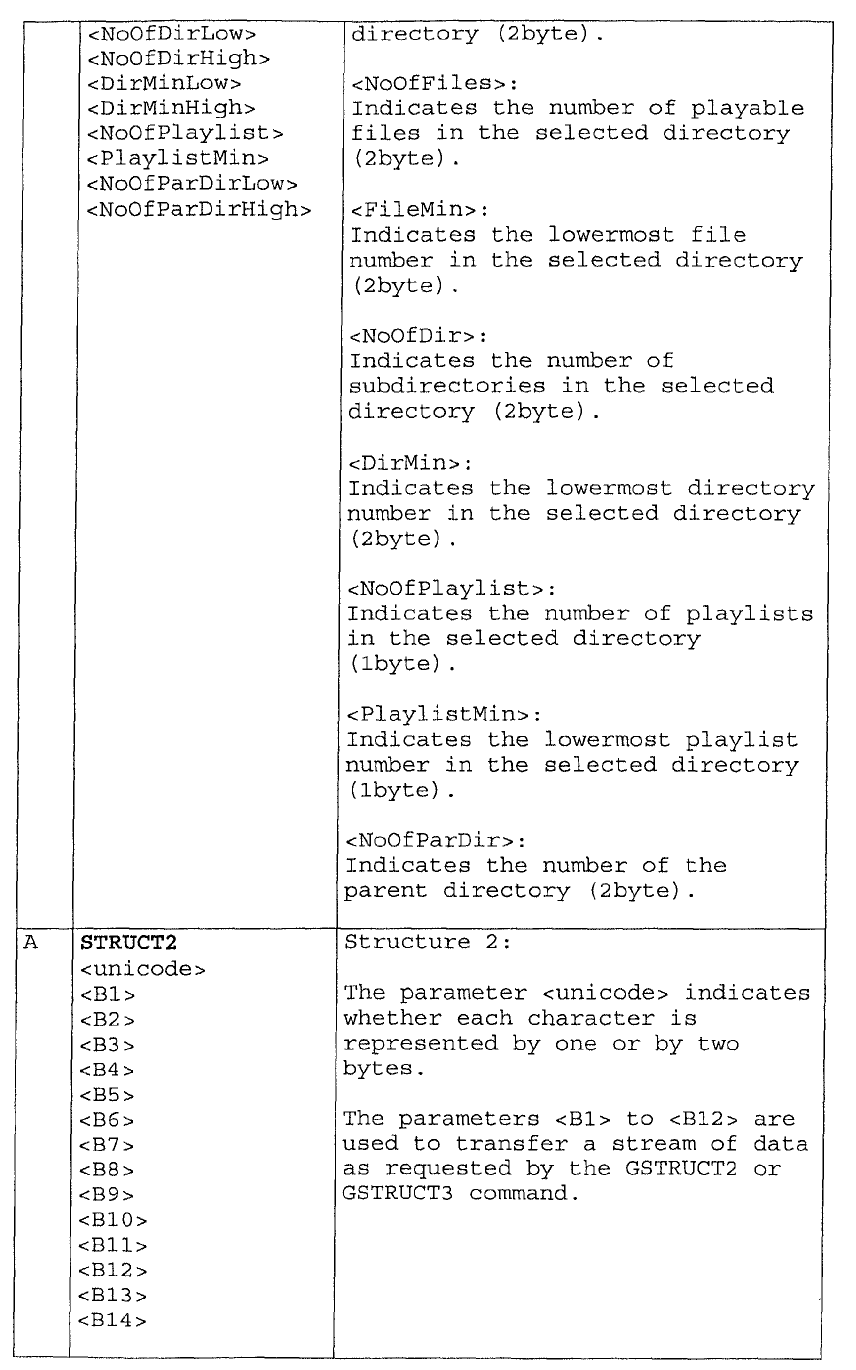

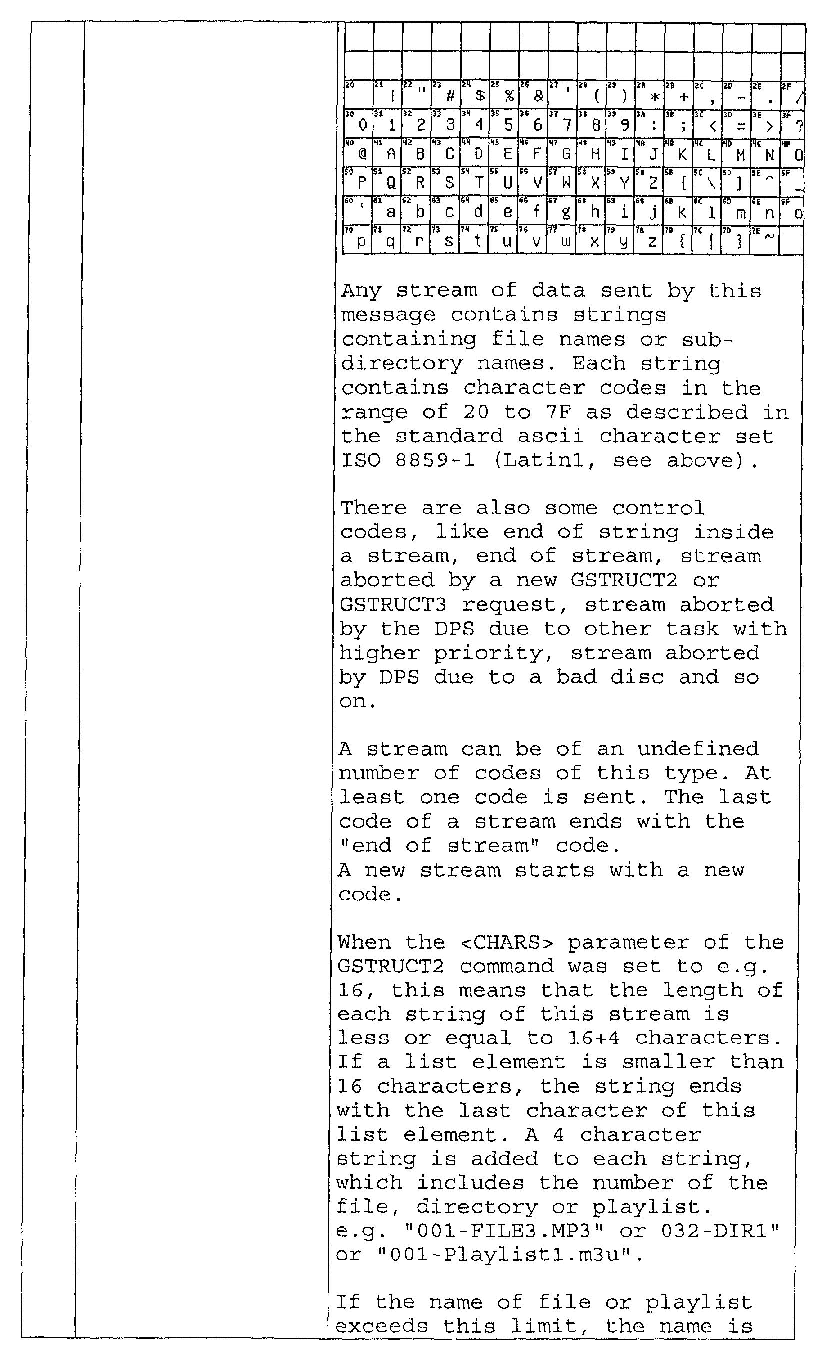

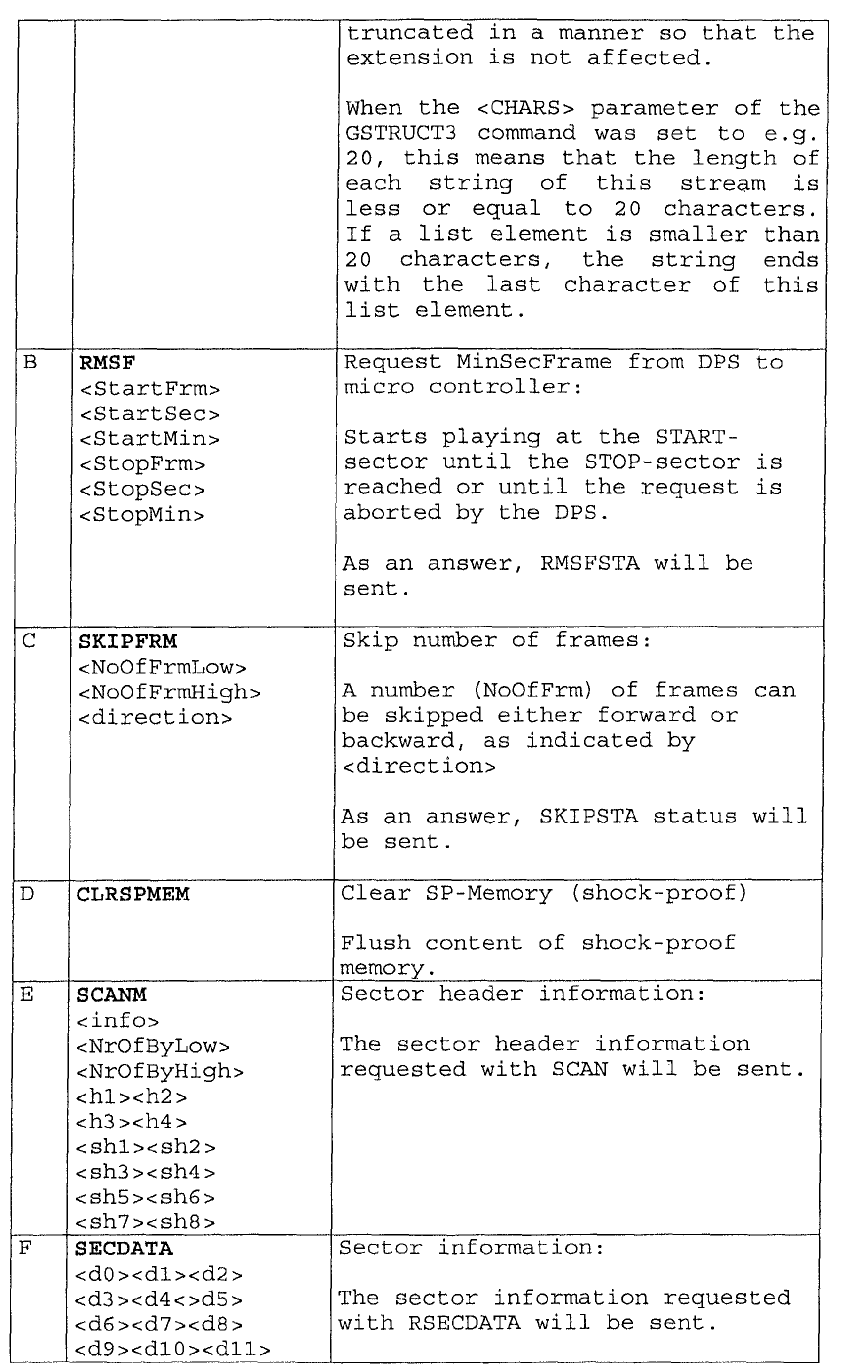

For a better understanding of the invention, an example for the communication between an Advanced audio processing system and a user interface is described with reference to the figures. It is understood that the invention is not limited to this example and that specified features can also expediently be combined and/or modified without departing from the scope of the present invention. In the figures:
- Fig. 1: shows an example of a directory and file structure;
- Fig. 2: shows an example of navigation inside the exemplary directory structure based on the communication protocol according to the invention.

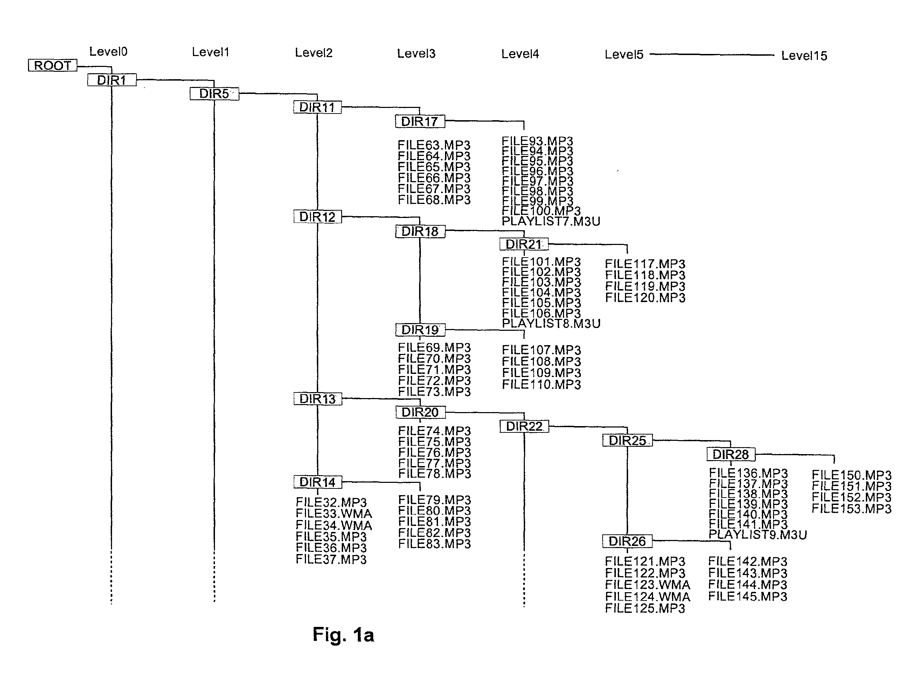

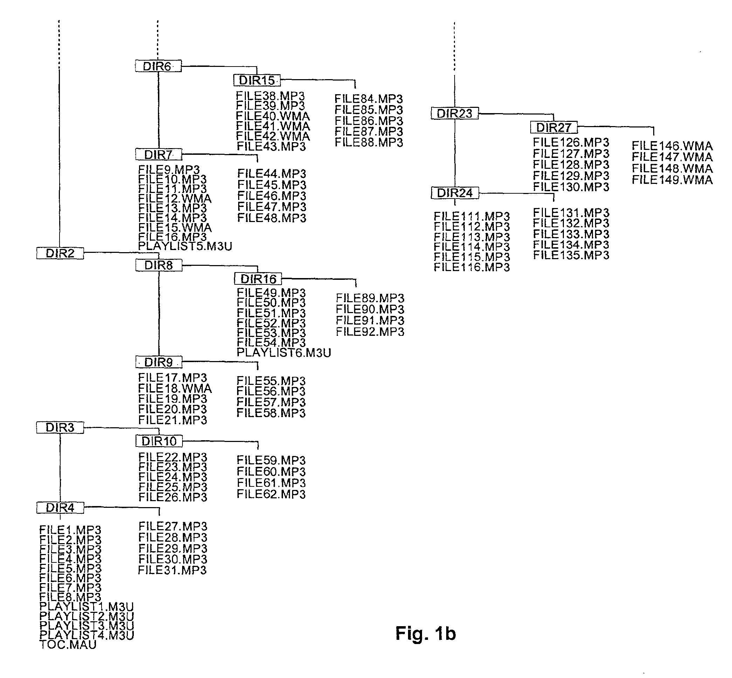

Fig. 1 (divided into Fig. 1a and Fig. 1b) shows an example of a directory and file structure in hierarchical view, which can be found on a storage medium. The files include different compressed audio files (with the extensions MP3 and WMA) and playlists (with the extension M3U). According to the example structure 153 files, 28 directories, 9 playlists and the file toc.mau are available. The file system can, therefore, be read without any partitioning.

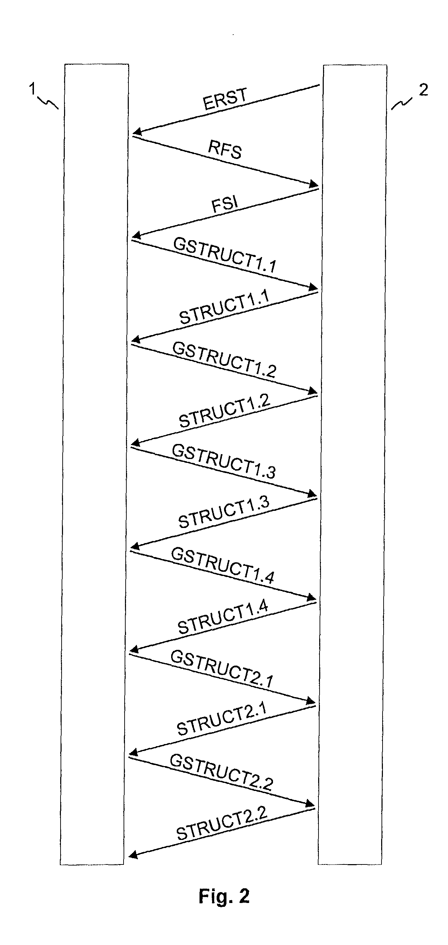

In Fig. 2 navigation inside the exemplary file structure using the communication protocol according to the invention is shown. After power-up of the DPS 2, the DPS 2 is initialized and the system 2 sends an error status message ERST to the micro controller 1. When the micro controller 1 detects a CD-ROM, it sends a request for the file system RFS to the DPS, which starts reading the file system and sends a file system information message FSI when the file system is completely read. The following steps of navigation relate to retrieving information about specific files and do only serve as an example. In a step GSTRUCT1.1 the micro controller 1 requests information about the root directory, which is transmitted by the DPS 2 in a message STRUCT1.1. In the next steps GSTRUCT1.2, GSTRUCT1.3, and GSTRUCT1.4, the DPS 2 is prompted to navigate to directory 2, then to the level-1 subdirectory 8, and finally to the level-2 subdirectory 16. The DPS confirms these navigation steps through the messages STRUCT1.2, STRUCT1.3, and STRUCT1.4, respectively. After the last confirmation message STRUCT1.4, the micro controller 1 requests the name of directory 16 and the names of the files in this directory in the steps GSTRUCT2.1 and GSTRUCT2.2. The requested information is transmitted by the DPS 2 in the steps STRUCT2.1 and STRUCT2.2, respectively.

## Claims

1. Communication protocol for the communication between an advanced data processing system (2) and a user interface unit and a micro controller (1), **characterized in that** a set of commands and messages necessary for content navigation on a storage medium comprising a file system with audio files, directories and/or playlists is defined.

2. Communication protocol according to claim 1, **characterized in that** the set of commands and messages is an extension to the Serial Bus for Compact Disc Servo Communication Protocol.

3. Communication protocol according to claim 1 or 2, **characterized in that** the set of commands and messages comprises commands and messages for requesting and sending file system information comprising names of audio files, directories and/or playlists.

4. Communication protocol according to anyone of claims 1 to 3, **characterized in that** the set of commands and messages comprises commands and messages for setting a playmode, and for requesting and sending playmode information.

5. Communication protocol according to anyone of the preceding claims, **characterized in that** the set of commands and messages comprises commands and messages for requesting and sending sector and/or sector header information.

6. Communication protocol according to anyone of the preceding claims, **characterized in that** the set of commands and messages comprises commands for skipping frames of the audio files and messages for sending information on the skipping status.

7. Communication protocol according to anyone of the preceding claims, **characterized in that** the set of commands and messages comprises commands for navigating between different partitions of the file system.

8. Communication protocol according to anyone of the preceding claims, **characterized in that** the set of commands and messages comprises commands and messages for requesting and sending additional information related to the audio files.

9. Communication protocol according to claim 8, **characterized in that** the set of commands and messages comprises commands for playing only specific audio files, the specific audio files being determined by the additional information related to the audio files.

10. Communication protocol according to anyone of the preceding claims, **characterized in that** the set of commands and messages comprises commands and messages for requesting and sending bitrate information for the audio files.

11. Advanced audio processing system, **characterized in that** it uses a communication protocol according to anyone of claims 1-10.

12. Apparatus for reading from and/or writing to optical recording media, **characterized in that** it uses a communication protocol according to anyone of claims 1-10 or an advanced data processing system according to claim 11.
